# EUROPÄISCHE PATENTSCHRIFT

(11) **EP 2 077 401 B1**
(45) Veröffentlichungstag und Bekanntmachung des Hinweises auf die Patenterteilung: **23.11.2011**
(21) Anmeldenummer: 08170359.7
(22) Anmeldetag: 01.12.2008
(51) Int. Cl.: F16D 48/06

(54) **Aktuatoranordnung für einen Kraftfahrzeugantriebsstrang sowie Verfahren zum Betreiben einer Aktuatoranordnung**
Actuator arrangement for a motor vehicle drive train and method of operating an actuator arrangement
Agencement d'actionneur pour une transmission de véhicule automobile et procédé de fonctionnement d'un agencement d'actionneur

(30) Priorität: 20.12.2007 DE 102007063212
(43) Veröffentlichungstag der Anmeldung: 08.07.2009
(73) Patentinhaber: GETRAG Getriebe- und Zahnradfabrik Hermann Hagenmeyer GmbH & Cie KG, 74199 Untergruppenbach (DE)
(72) Erfinder: Seufert, Martin, 71711 Steinheim (DE); Ludwig, Michael Gerhard, 74889 Sinsheim (DE); Nägele, Volker, 78141 Schönwald (DE)
(74) Vertreter: Witte, Weller & Partner

(56) Entgegenhaltungen:
- WO-A1-01/98689
- WO-A2-03/019047
- DE-A1- 10 316 442
- US-A1- 2002 026 271
- US-A1- 2006 223 672
- US-A1- 2007 139 834

## Beschreibung

Die vorliegende Erfindung betrifft eine Aktuatoranordnung für einen Kraftfahrzeugantriebsstrang, mit einer Steuereinrichtung, einem Aktuator und einer Ansteuerschaltung für den Aktuator, die wenigstens ein Sollsignal betreffend eine Aktuatorgröße an der Steuereinrichtung erhält und in ein Ansteuersignal für den Aktuator umsetzt, wobei die Steuereinrichtung mittels einer Überwachungseinrichtung auf Fehler hin überprüft wird und wobei die Ansteuerschaltung und/oder eine zwischen Ansteuerschaltung und Aktuator angeordnete Leistungsstufe bei Auftreten eines solchen Fehlers ein Reset-Signal erhält.

Die Erfindung betrifft ferner ein entsprechendes Verfahren zum Betreiben einer solchen Aktuatoranordnung.

In automatisierten Kraftfahrzeugantriebssträngen werden Kupplungen häufig mittels eines elektrischen Motors betätigt. Die Kupplungen können beispielsweise getriebeeingangsseitige Reibkupplungen wie Anfahrkupplungen sein. Die Kupplungen können jedoch auch Schaltkupplungen zum Schalten von Gangstufen eines Getriebes sein. Ferner können die Kupplungen als Reibkupplungen oder -bremsen für Wandlerautomatikgetriebe ausgebildet sein.

Die bekannten Aktuatoranordnungen beinhalten eine Steuereinrichtung, die beispielsweise als Kupplungs- oder Getriebesteuereinrichtung ausgelegt sein kann und die Kupplung (und ggf. weitere Kupplungen) aufgrund einer übergeordneten Steuerstrategie betätigt. Die Steuereinrichtung kann mit einer übergeordneten Steuereinheit verbunden sein, die dem Antriebsstrang zugeordnet ist, und/oder mit einer Antriebs-Steuereinrichtung für einen Antriebsmotor des Antriebsstranges (z.B. einen Verbrennungsmotor oder einen Hybridantrieb) kommunizieren. Bei Auftreten von Fehlern in der Steuereinrichtung sorgt eine Überwachungseinrichtung (beispielsweise ein Watch-Dog-Baustein) dafür, dass ein Reset-Signal erzeugt wird. Das Reset-Signal kann dazu verwendet werden, den Aktuator so anzusteuern, dass die zugeordnete Kupplung in einen Grundzustand versetzt wird. Dies kann beispielsweise dadurch erfolgen, dass die Ansteuerschaltung und/oder eine Leistungsstufe ein Reset-Signal in Form eines Abschaltsignals erhalten.

Die Ansteuerschaltung ist als von der Steuereinrichtung getrennte Schaltung ausgebildet, beispielsweise als eigener Mikrocontroller und/oder als eine eigene, in Hardware-Komponenten aufgebaute Schaltung (beispielsweise unter Verwendung eines ASIC-Bausteines). Derartige Bausteine können einfache Sollwertvorgaben in komplexe Ansteuersignale für den elektrischen Aktuator umsetzen.

Der Aktuator kann ein elektrischer Aktuator, wie ein elektrischer Motor und/oder ein elektromagnetischer Aktuator sein.

Obwohl die für die Steuereinrichtung vorgesehene Überwachungseinrichtung bereits für eine hohe Sicherheit sorgt, erscheint eine Verbesserung der Sicherheit anstrebenswert.

WO 01/98689 A1 zeigt eine Aktuator anordnung nach dem Oberbegriff des Anspruchs 1.

Die Aufgabe der Erfindung besteht folglich darin, eine verbesserte Aktuatoranordnung sowie ein verbessertes Verfahren zum Betreiben einer solchen Aktuatoranordnung anzugeben, mit denen die Sicherheit erhöht werden kann.

Die obige Aufgabe wird durch die Merkmale des Anspruchs 1 gelöst.

Die Erfindung wird ferner durch ein entsprechendes Verfahren zum Betreiben einer solchen Aktuatoranordnung gelöst.

Bei einem Fehler in der Ansteuerschaltung können im Stand der Technik gegebenenfalls fehlerhafte Signale über den Status des Aktuators an die übergeordnete Steuereinrichtung übermittelt werden. Dies kann zu einem Fehlverhalten führen, das nicht erkannt werden kann und folglich auch nicht beherrschbar ist.

Durch die Maßnahme, die Funktion der Ansteuerschaltung in der Steuereinrichtung zu überprüfen und bei Auftreten einer Fehlfunktion in der Ansteuerschaltung ein Reset-Signal zu erzeugen, kann ein solcher Fehler in der Ansteuerschaltung detektiert werden. Ferner kann der Aktuator in einen - beherrschbaren - Grundzustand versetzt werden. Beispielsweise kann der Aktuator abgeschaltet werden, so dass das mittels des Aktuators angesteuerte Bauteil (z.B. eine Kupplung) in einen Grundzustand versetzt wird. Im Falle einer Kupplung sorgt häufig ein mechanischer Energiespeicher dafür, dass die Kupplung bei fehlender Ansteuerung in einen solchen Grundzustand versetzt wird, in der Regel in einen Grundzustand, bei dem die Kupplung geöffnet ist, und/oder einen Grundzustand, bei dem die Kupplung in einen Neutralzustand versetzt wird.

Von besonderer Bedeutung ist die vorliegende Erfindung bei der Anwendung auf Kraftfahrzeugantriebssträngen mit einem Doppelkupplungsgetriebe. Bei den dabei verwendeten, getriebeeingangsseitigen Reibkupplungen werden trockene oder nasslaufende Kupplungen (wie zum Beispiel Lamellenkupplungen) in solchen Doppelkupplungsgetrieben überschneidend betätigt, wobei das Antriebsmoment zugkraftunterbrechungsfrei von der einen Reibkupplung auf die andere übergeben werden kann. Fehlsteuerungen der Kupplungen können hierbei zu Verspannungen im Antriebsstrang führen.

Durch die Maßnahme, die Ansteuerschaltung der Aktuatoranordnung in der übergeordneten Steuereinrichtung zu überwachen, können solche Verspannungszustände folglich vermieden werden.

Es versteht sich dabei, dass bei Auftreten einer Fehlfunktion in der Ansteuerschaltung gegebenenfalls zusätzlich ein Reset-Signal für das Gesamtsystem erzeugt werden kann.

Ferner versteht sich, dass die Steuereinrichtung ein Reset-Signal an einen separat vorgesehenen Reset-Baustein senden kann, der dann wiederum Reset-Signale erzeugt. Die Reset-Signale können Abschaltsignale sein oder auch Rücksetzsignale für Mikrocontroller, etc.

Die obige Aufgabe wird somit vollkommen gelöst.

Nach der Erfindung ist die Steuereinrichtung dazu ausgelegt, ein Kontrollsignal von dem Aktuator zu empfangen und das Kontrollsignal daraufhin zu überprüfen, ob die Ansteuerschaltung ordnungsgemäß funktioniert. Das Kontrollsignal kann auf einer speziell für die erfindungsgemäße Aktuatoranordnung vorgesehene Sensoranordnung beruhen. Das Kontrollsignal kann jedoch auch auf Informationen beruhen, die von einer ohnehin im Bereich des Aktuators angeordneten Sensoreinrichtung stammt.

Der Grundgedanke dieser Art von Überwachung der Ansteuerschaltung besteht folglich darin, eine Information über den Zustand des Aktuators der Steuereinrichtung unabhängig von der Ansteuerschaltung zuzuführen. Dabei versteht sich, dass die Ansteuerschaltung dieselbe oder ähnliche Informationen ebenfalls von dem Aktuator erhält, um diesen nach der Art einer rückgekoppelten Regelung ansteuern zu können.

Nach der Erfindung ist die Steuereinrichtung dazu ausgelegt von der Ansteuerschaltung ein weiteres Signal zu empfangen und das Kontrollsignal und das weitere Signal daraufhin auszuwerten, ob die Ansteuerschaltung ordnungsgemäß funktioniert.

Bei dieser Ausführungsform sendet die Ansteuerschaltung Informationen an die Steuereinrichtung, und diese Informationen, die in dem weiteren Signal enthalten sind, werden mit dem Kontrollsignal zusammen ausgewertet. Hierdurch lässt sich abfragen, ob die Ansteuerschaltung richtig arbeitet.

Von besonderem Vorzug ist es dabei, wenn das weitere Signal ein Istsignal betreffend eine Aktuatorgröße ist.

Das Istsignal kann beispielsweise auf Informationen in der Ansteuerschaltung über den Zustand des Aktuators beruhen, wobei die Ansteuerschaltung diese Information von einer Sensoreinrichtung des Aktuators erhält.

Ferner ist es vorteilhaft, wenn das Istsignal ein digitales Signal ist.

Insbesondere ist es vorteilhaft, wenn das Istsignal ein solches Signal ist, das eine Information über den Akuator über eine einzelne Leitung übertragen kann. Das Istsignal kann ein Pulssignal (z.B. pro Kommutierung ein Impuls), ein Frequenzsignal (z.B. Frequenz proportional zur Drehzahl), ein TWM-Signal (z.B. ein Puls pro Kommutierung und Pulsweite in Abhängigkeit von der Drehrichtung) oder Ähnliches sein.

Gemäß einer weiteren bevorzugten Ausführungsform weist das Kontrollsignal ein digitales Signal von wenigstens einem Sensor auf.

Der Sensor ist vorzugsweise dem Aktuator zugeordnet. Bei einem elektrischen Motor kann dies beispielsweise eine Hall-Sensoranordnung sein. Eine solche Hall-Sensoranordnung ist besonders bevorzugt in Verbindung mit einem bürstenlosen elektrischen Motor verwendbar, der im Rotor Permanentmagnete aufweist. Die Bewegung der Permanentmagnete lässt sich mittels der Hall-Sensoranordnung auf besonders einfache Weise erfassen.

Gemäß einer weiteren bevorzugten Ausführungsform weist das Kontrollsignal mehrere digitale Signale auf, die den Zustand des Aktuators überwachen.

Beispielsweise kann eine Sensoranordnung für den Aktuator einer Hall-Sensoranordnung mit mehreren Hall-Sensoren sein, die zum Beispiel über den Umfang verteilt angeordnet sind. Mit einer solchen Hall-Sensoranordnung lassen sich sowohl die Drehzahl als auch die Drehrichtung und/oder die Drehposition des elektrischen Motors messen.

Gemäß einer weiteren bevorzugten Ausführungsform ist das digitale Kontrollsignal demgemäß ein digitales Kommutierungssignal.

Ein solches Kommutierungssignal kann beispielsweise von einer Hall-Sensoranordnung erfasst werden, wie oben beschrieben ist. Generell kann das Kommutierungssignal jedoch auch über einen Sensor erfasst werden, der die elektrische Kommutierung eines elektrischen Motors erfasst, der Bürsten zur elektrischen Kommutierung aufweist.

Ferner ist es insgesamt bevorzugt, wenn das digitale Kontrollsignal einer Wandlereinrichtung zugeführt wird, die das digitale Kontrollsignal in ein Kontrollsignal umsetzt, das der Steuereinrichtung zugeführt wird.

Eine solche Wandlereinrichtung kann das von dem Sensor kommende digitale Kontrollsignal in ein für die Steuereinrichtung geeignetes analoges oder digitales Signal umwandeln und kann beispielsweise nach der Art eines Digital/Analog-Wandlers arbeiten und der Steuereinrichtung ein analoges Kontrollsignal zuführen, was auf vergleichsweise einfache Weise in der Steuereinrichtung verarbeitet werden kann. Die Wandlereinrichtung kann als separates Bauteil ausgeführt oder in eine dem Motor zugeordnete Sensoranordnung integriert sein.

Dabei ist es von besonderem Vorteil, wenn das Kontrollsignal Information über den Status des Aktuators, insbesondere über die Drehrichtung und/oder über die Drehzahl bzw. Drehstellung des Aktuators enthält.

Gemäß einer weiteren bevorzugten Ausführungsform ist das Sollsignal, das von der Steuereinrichtung an die Ansteuerschaltung übermittelt wird, ein analoges Signal.

Vorteilhaft ist es hierbei ferner, wenn das Istsignal und das Sollsignal auf einer bidirektionalen Leitung zwischen der Steuereinrichtung und der Ansteuerschaltung übertragen werden.

Es versteht sich, dass pro Statusinformation eine eigene Leitung vorgesehen sein kann. Alternativ ist es auch möglich, über eine bidirektionale Leitung mehrere Statusinformationen (beispielsweise Drehzahl und Drehrichtung) zu übertragen. Ferner ist es vorteilhaft, wenn der Aktuator als Motor ausgebildet ist und einen vorgegebenen Drehzahlbereich aufweist, wobei die Steuereinrichtung und/oder eine Wandlereinrichtung, die das Kontrollsignal in ein Kontrollsignal für die Steuereinrichtung umsetzt, dazu ausgelegt ist, das Kontrollsignal bis zu einer ersten vorgegebenen Drehzahl innerhalb des Drehzahlbereiches so zu verarbeiten, dass sich aus dem verarbeiteten Kontrollsignal die Drehzahl des Motors exakt reproduzieren lässt, und wobei oberhalb der ersten vorgegebenen Drehzahl eine Plausibilisierungseinrichtung in der Steuereinrichtung und/oder in der Wandlereinrichtung das verarbeitete Kontrollsignal daraufhin überprüft, ob sich die daraus ergebende Drehzahl innerhalb eines vorgegebenen Drehzahlbandes bzw. Genauigkeitsbandes befindet.

Bei dieser Ausführungsform kann mittels der Plausibilisierungseinrichtung eine Überprüfung der Ansteuerschaltung auch dann erfolgen, wenn die zur Verfügung stehende Rechenleistung nicht hinreichend ist, um über den gesamten vorgegebenen Drehzahlbereich eine exakte Information über die Drehzahl des Motors zu erhalten. Die erste vorgegebene Drehzahl kann dabei kleiner sein als eine Drehzahl, die sich per se gemäß dem Nyquist-Kriterium gar nicht mehr reproduzieren lässt. Bei Annäherung an eine solche Nyquist-Drehzahl lässt die Genauigkeit nach. Trotz dieser verringerten Genauigkeit kann mittels der Plausibilisierungseinrichtung abgeprüft werden, ob die Ansteuerschaltung ordnungsgemäß arbeitet.

Selbst wenn die dem Kontrollsignal entsprechende Information über den Zustand des Motors von der Ansteuerschaltung nicht zeitlich entsprechend zur Verfügung gestellt werden kann (jedenfalls oberhalb der ersten vorgegebenen Drehzahl), kann mittels der Plausibilisierungseinrichtung eine Aussage über den Betrieb der Ansteuerschaltung getroffen werden.

Dabei ist es von besonderem Vorteil, wenn das Drehzahlband bzw. Genauigkeitsband umso größer ist, umso mehr die sich aus dem verarbeiteten Kontrollsignal ergebende Drehzahl von der ersten vorgegebenen Drehzahl abweicht.

Folglich kann bei Drehzahlen wenig oberhalb der ersten vorgegebenen Drehzahl mit einer relativ hohen Genauigkeit geprüft werden, ob die Ansteuerschaltung ordnungsgemäß arbeitet. Diese Genauigkeit fällt dann mit höheren Drehzahlen ab.

Gemäß einer weiteren bevorzugten Ausführungsform weist der als Aktuator ausgebildete Motor einen vorgegebenen Drehzahlbereich auf, wobei die Steuereinrichtung und/oder eine Wandlereinrichtung, die das Kontrollsignal in ein Kontrollsignal für die Steuereinrichtung umsetzt, dazu ausgelegt ist, das Kontrollsignal bis zu einer zweiten vorgegebenen Drehzahl innerhalb des Drehzahlbereiches so zu verarbeiten, dass das Nyquist-Kriterium eingehalten wird, und wobei oberhalb der zweiten vorgegebenen Drehzahl eine Plausibilisierungseinrichtung in der Steuereinrichtung und/oder in der Wandlereinrichtung überprüft, ob es plausibel ist, dass sich die Drehzahl oberhalb der zweiten vorgegebenen Drehzahl befindet.

Durch diese Ausführungsform kann auch dann überprüft werden, ob die Ansteuerschaltung ordnungsgemäß arbeitet, wenn die Rechenleistung beispielsweise nicht hinreichend ist, um - bei relativ hohen Drehzahlen - die Drehzahl des Motors zu erfassen bzw. einen zeitlichen Zusammenhang zwischen dem Kontrollsignal und Information herzustellen, die von der Ansteuerschaltung kommt. Hierbei kann in der Plausibilisierungseinrichtung beispielsweise auf vorherige Zustände zurückgegriffen werden, um zu überprüfen, ob die Ansteuerschaltung ordnungsgemäß arbeitet.

So ist es bevorzugt, wenn die Plausibilisierungseinrichtung es als plausibel erkennt, dass sich die Drehzahl oberhalb der zweiten vorgegebenen Drehzahl befindet, wenn sich die Drehzahl zuvor in einem Drehzahlband unterhalb der zweiten vorgegebenen Drehzahl befand.

Insgesamt ist es vorteilhaft, wenn die Ansteuerschaltung einen ASIC-Baustein aufweist.

Mittels eines solchen Bausteines kann die Ansteuerschaltung an den jeweiligen Aktuator angepasst werden und kompakt ausgebildet werden.

Gemäß einer weiteren bevorzugten Ausführungsform ist der Aktuator ein bürstenloser elektrischer Motor.

Wie bereits oben erläutert, kann bei dem bürstenlosen Motor ein Kommutierungssignal aus einer Sensoranordnung, insbesondere einer Hall-Sensoranordnung, abgeleitet werden.

Bei den oben beschriebenen Ausführungsformen wird generell der Ansatz verfolgt, dass Sensorsignale von einem Aktuator in einer Wandlereinrichtung umgewandelt und der Steuereinrichtung eingegeben werden. In der Steuereinrichtung erfolgt ein Vergleich von über die Wandlereinrichtung übermittelter Information über den Zustand des Motors und von Zustandsinformation, die aus der Ansteuerschaltung ausgelesen wird, und zwar in der Steuereinrichtung.

Hierbei ist die Qualität des Vergleichs von der Geschwindigkeit bzw. Drehzahl abhängig.

Gemäß einer alternativen Ausführungsform kann ein geschwindigkeitsunabhängiger Vergleich durchgeführt werden, wenn die Steuereinrichtung dazu ausgelegt ist, ein Zustandssignal von dem Aktuator mit einem Zustandssignal der Ansteuerschaltung zeitlich bzw. zeitlich zugeordnet miteinander zu vergleichen, um die Funktion der Ansteuerschaltung zu überprüfen.

Dies erfordert in der Regel, dass die Signale von dem Aktuator und von der Ansteuerschaltung über geeignete Synchronisierungseinrichtungen (beispielsweise Sync-Signale auf Sync-Leitungen) zueinander in Relation gesetzt werden.

Diese alternative Ausführungsform kann alternativ oder kumulativ zu den ersten genannten Ausführungsformen verwendet werden.

Bei der alternativen Ausführungsform kann, wenn zwischen der Steuereinrichtung und der Ansteuerschaltung ein Sync-Signal übertragen wird, in der Steuereinrichtung eine zeitliche Zuordnung zwischen den Zustandssignalen erfolgen.

Aufgrund des Sync-Signals kann der Vergleich der Zustandssignale unabhängig von der Motordrehzahl und unabhängig vom Nyquist-Kriterium erfolgen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: ein schematisches Blockschaltbild einer Aktuatoranordnung gemäß einem Ausführungsbeispiel der Erfindung;
- Figur 2: ein analoges Ausgangssignal einer Wandlereinrichtung der Aktuator- anordnung der Figur 1 über der Zeit;
- Figur 3: ein Diagramm zur Darstellung der erzielbaren Genauigkeiten in Ab- hängigkeit von der Drehzahl;
- Figur 4: ein schematisches Ablaufdiagramm zur Überprüfung der Funktions- weise einer Ansteuerschaltung der Aktuatoranordnung der Figur 1; und
- Figur 5: ein Zeitdiagramm zur Darstellung einer alternativen Ausführungsform einer erfindungsgemäßen Aktuatoranordnung.

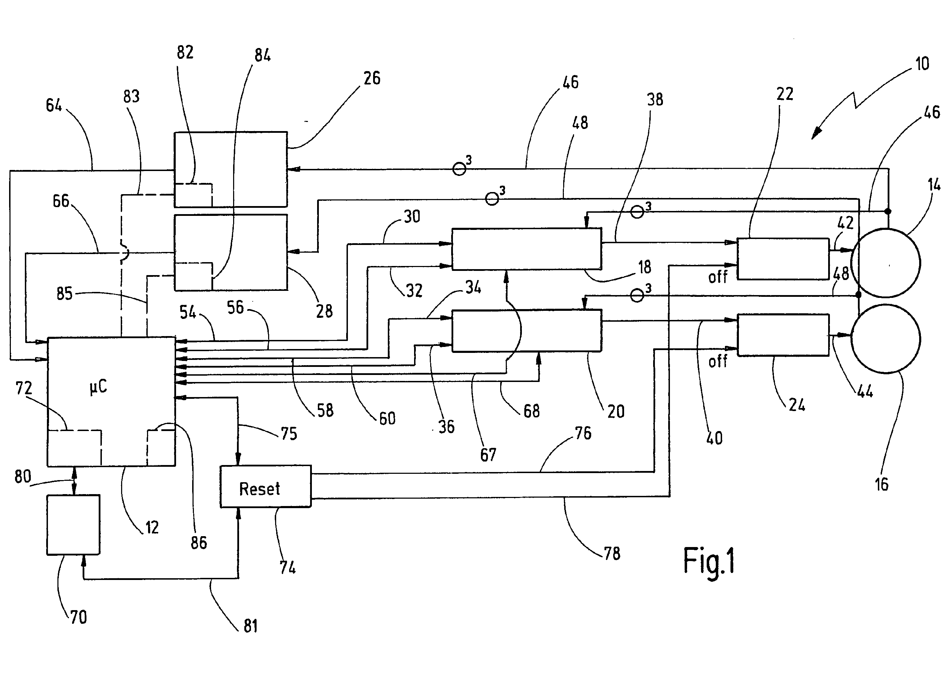

In Figur 1 ist eine erste Ausführungsform einer erfindungsgemäßen Aktuatoranordnung generell mit 10 bezeichnet. Die Aktuatoranordnung 10 weist eine Steuereinrichtung 12 auf, die einen Mikrocontroller bzw. Mikroprozessor beinhaltet und dazu ausgelegt ist, Computerprogramme zu verarbeiten.

Die Aktuatoranordnung 10 ist zur Ansteuerung der zwei Kupplungen eines Doppelkupplungsgetriebes für ein Kraftfahrzeug ausgelegt. Zu diesem Zweck weist die Aktuatoranordnung 10 zwei Aktuatoren in Form eines ersten elektrischen Motors 14 und in Form eines zweiten elektrischen Motors 16 auf. Es versteht sich jedoch, dass eine erfindungsgemäße Aktuatoranordnung in gleicher Weise Aktuatoren in Form von hydraulischen Aktuatoren und/oder in Form von elektromagnetischen Aktuatoren aufweisen kann. Ferner versteht sich, dass eine erfindungsgemäße Aktuatoranordnung in gleicher Weise nur einen einzelnen Aktuator aufweisen kann. Schließlich versteht sich, dass die erfindungsgemäße Aktuatoranordnung insbesondere zur Verwendung in Kraftfahrzeugantriebssträngen ausgelegt ist, jedoch auch in anderen Anwendungsbereichen Verwendung finden kann. In Kraftfahrzeugantriebssträngen kann eine erfindungsgemäße Aktuatoranordnung sowohl zur Ansteuerung von Reibkupplungen wie Anfahrkupplungen verwendet werden, aber auch zur Ansteuerung von Schaltkupplungen im Getriebe und/oder zur Ansteuerung von Kupplungen oder Bremsen in Wandlerautomatgetrieben. Gleichfalls ist eine Anwendung auf die Aktuatorik von stufenlosen Getrieben denkbar, beispielsweise bei der Betätigung eines Kegelscheibenpaares oder von Toroidgetriebescheiben.

Die Aktuatoranordnung 10 der Figur 1 beinhaltet ferner eine erste Ansteuerschaltung 18 und eine zweite Ansteuerschaltung 20. Die Ansteuerschaltungen 18, 20 sind als separate Baugruppen vorgesehen, die funktional und/oder räumlich getrennt von der Steuereinrichtung 12 vorgesehen sind. Die Ansteuerschaltungen 18, 20 dienen dazu, Sollsignale für die Motoren 14, 16 in geeignete Ansteuersignale für diese Motoren umzusetzen. Die Ansteuerschaltungen 18, 20 können zu diesem Zweck als Hardware-Schaltungen mit diskreten Bauelementen aufgebaut sein, insbesondere mit applikationsspezifischen Bauteilen (kurz ASICs). Generell ist es jedoch auch denkbar, dass die Ansteuerschaltungen 18, 20 eine eigene "Intelligenz" beinhalten, beispielsweise in Form eines Mikrocontrollers oder Ähnliches.

Zur Ansteuerung der Motoren 14, 16 beinhaltet die Aktuatoranordnung 10 ferner eine erste Leistungsstufe 22 und eine zweite Leistungsstufe 24. Die Leistungsstufen 22, 24 sind dazu ausgelegt, Steuersignale (die üblicherweise auf einem niedrigen Pegel vorliegen) in Leistungssignale für die Motoren 14, 16 umzusetzen.

Ferner beinhaltet die Aktuatoranordnung 10 eine erste Wandlereinrichtung 26 und eine zweite Wandlereinrichtung 28, die nicht näher bezeichnete Sensoren der Motoren 14, 16 mit der Steuereinrichtung 12 koppeln.

Die Motoren 14, 16 können als Bürsten-kommutierte Gleichstrommotoren ausgebildet sein, sind jedoch vorzugsweise bürstenlose elektrische Maschinen, deren Rotoren Permanentmagnete aufweisen. Die Funktionsweise derartiger Motoren ist allgemein bekannt, so dass auf Details hiervon vorliegend nicht eingegangen wird.

Die Motoren 14, 16 werden hinsichtlich ihrer Zustände betreffend die Drehrichtung, betreffend die Drehzahl und/oder betreffend den Drehweg (Drehwinkel) gesteuert.

Zu diesem Zweck ist die Steuereinrichtung 12 mit den Ansteuerschaltungen 18, 20 über bidirektionale Leitungen verbunden. Über diese bidirektionalen Leitungen erhalten die Ansteuerschaltungen 18, 20 jeweils einen ersten Motorsollwert 30, 34 betreffend die Drehrichtung und einen zweiten Motorsollwert 32, 36 betreffend den Drehweg (und/oder die Drehzahl). In den Ansteuerschaltungen 18, 20 werden diese Motorsollwerte jeweils in Ansteuersignale 38, 40 umgesetzt, die an die Leistungsstufen 22, 24 übermittelt werden. Die Leistungsstufen 22, 24 erzeugen hieraus jeweils ein Stellsignal 42, 44, das an Spulen der Motoren 14, 16 angelegt wird.

Die Motoren 14, 16 weisen jeweils Sensoren auf, die den Zustand der Motoren 14, 16 überwachen. Die Sensoren (die in den Figuren nicht dargestellt sind) können beispielsweise eine Hall-Sensoranordnung für jeden der Motoren 14, 16 beinhalten. Eine solche Hall-Sensoranordnung beinhaltet beispielsweise zwei, drei oder mehr Hall-Sensoren, die über den Drehumfang des jeweiligen Motors 14, 16 herum angeordnet sind. Die Hall-Sensoren sind dazu ausgelegt, die Drehung des Rotors zu erfassen, der, wie oben gesagt, vorzugsweise mit Permanentmagneten ausgestattet ist.

Die Sensoren übersenden Istsignale 46, 48 betreffend den jeweiligen Zustand der Motoren 14, 16 an die Ansteuerschaltungen 18, 20. Durch diese Rückkopplung ist es den Ansteuerschaltungen 18, 20 möglich, den Zustand der Motoren 14, 16 zu regeln.

Ferner übermitteln die Ansteuerschaltungen 18, 20 den Zustand des Motors jeweils an die Steuereinrichtung 12. Im vorliegenden Fall erfolgt dies über die bidirektionalen Leitungen in Form von jeweiligen ersten Motoristwerten 54, 58 (beispielsweise betreffend die Drehrichtung) und zweiten Motoristwerten 56, 60 (beispielsweise betreffend den Drehweg oder die Drehzahl). In anderen Fällen kann der Zustand des jeweiligen Motors von der jeweiligen Ansteuerschaltung 18, 20 über eine einzelne bidirektionale Leitung übermittelt werden.

In der Steuereinrichtung 12 ist folglich eine Information über den jeweiligen Zustand der Motoren 14, 16 vorhanden, und zwar über die von den Ansteuerschaltungen 18, 20 übermittelten Istwerte 54-60. Die Steuereinrichtung 12 kann folglich die übergeordnete Steuerung in Kenntnis dieser Zustände durchführen.

Die Sensoren der elektrischen Motoren 14, 16 sind, wie oben erwähnt, ferner mit einer ersten und einer zweiten Wandlereinrichtung 26, 28 verbunden. Im vorliegenden Fall kann die Sensoranordnung beispielsweise drei Sensoren beinhalten, so dass die Istsignale 46, 48 beispielsweise über drei Adern an die Ansteuerschaltungen 18, 20 bzw. an die Wandlereinrichtungen 26, 28 übermittelt werden.

Die Wandlereinrichtungen 26, 28 erzeugen aus den jeweiligen Istsignalen 46, 48 analoge Kontrollsignale 64, 66, die jeweils in die Steuereinrichtung 12 eingegeben werden. Die Steuereinrichtung 12 erhält folglich Informationen über den Zustand der Motoren 14, 16 nicht nur über die Ansteuerschaltungen 18, 20, sondern zusätzlich über die Wandlereinrichtungen 26, 28. Aufgrund dieser zusätzlichen Information kann die Steuereinrichtung 12 erkennen, ob die Ansteuerschaltungen 18, 20 ordnungsgemäß funktionieren.

Die Steuereinrichtung 12 kann ferner mit den Ansteuerschaltungen 18, 20 jeweils über ein Sync-Signal 67, 68 verbunden werden, was nachstehend noch erläutert werden wird.

Die Aktuatoranordnung 10 beinhaltet ferner Mittel zur Überwachung der Funktion der Steuereinrichtung 12. Dies kann wie dargestellt ein so genannter Watch-Dog-Baustein 70 sein. Alternativ oder zusätzlich hierzu kann in der Steuereinrichtung 12 ein Überwachungsprogramm 72 ablaufen, das die Funktion der Steuereinrichtung 12 überprüft.

Die Steuereinrichtung 12 ist ferner mit einem Reset-Bauteil 74 verbunden. Das Reset-Bauteil 74 ist ein Bauteil, das über Fehlfunktionen in der Aktuatoranordnung 10 informiert wird und bei Auftreten eines Fehlers Reset-Signale abgeben kann. Ein Reset-Signal soll vorliegend ein Signal sein, das ein anderes Bauteil in einen Grundzustand versetzt. Bei einem Mikrocontroller-gesteuerten Bauteil kann dies beispielsweise dazu führen, dass das Bauteil neu gestartet ("gebootet") wird. Bei anderen Bauteilen kann ein solches Reset-Signal benutzt werden, um das Bauteil abzuschalten, um einen Abschaltzustand (Grundzustand) zu erreichen.

Im vorliegenden Fall ist das Reset-Bauteil 74 mit den Leistungsstufen 22, 24 verbunden und kann bei Auftreten eines Fehlerzustandes Reset-Signale in Form eines ersten Abschaltsignals 76 und eines zweiten Abschaltsignals 78 an die Leistungsstufen 22, 24 übermitteln. Wenn die Leistungsstufen 22, 24 auf diese Weise abgeschaltet werden, üben die Motoren 14, 16 keine Aktuatorkraft mehr auf die anzusteuernden Bauteile (z.B. Kupplungen) aus.

Die anzusteuernden Bauteile können beispielsweise mechanisch in einen Grundzustand vorgespannt sein, so dass bei fehlender Ansteuerung durch die elektrischen Motoren 14, 16 ein Grundzustand dieser Bauteile erreicht wird. Die getriebeeingangsseitigen Kupplungen eines Doppelkupplungsgetriebes können beispielsweise durch mechanische Energiespeicher wie Federn in einen solchen Grundzustand vorgespannt sein, bei dem die Kupplungen geöffnet sind (so genannter "normally open"-Zustand). Mit anderen Worten kann über das Reset-Bauteil 74 erreicht werden, dass die Kupplungen geöffnet werden. Hierdurch kann bei Auftreten eines Fehlers, insbesondere Auftreten eines sicherheitsrelevanten Fehlers, ein sicherer Zustand des Doppelkupplungsgetriebes erreicht werden.

Andere Kupplungen können auch in einen anderen Grundzustand vorgespannt sein, beispielsweise in einen geschlossenen Zustand ("normally closed"-Zustand).

Der Watch-Dog-Baustein 70 ist über eine bidirektionale Verbindung 80 mit der Steuereinrichtung 12 verbunden und kann beispielsweise dazu ausgelegt sein, die Steuereinrichtung 12 regelmäßig abzufragen, um auf diese Weise die Funktionsfähigkeit der Steuereinrichtung 12 zu überprüfen.

Bei Verwendung des Watch-Dog-Bausteins 70 kann dieser unmittelbar über eine Verbindung 81 mit dem Reset-Bauteil 74 verbunden sein, so dass der Watch-Dog-Baustein 70 einen Reset und damit ein Abschalten der Leistungsstufen 22, 24 einleiten kann. Bei Verwendung des Überwachungsprogrammes 72 wird ein Fehler unmittelbar in der Steuereinrichtung 12 erkannt und über eine Verbindung 75 dem Reset-Bauteil 74 zugeleitet, das dann einen Reset auslösen kann.

Das Reset-Bauteil 74 kann noch mit weiteren Baugruppen des Gesamtsystems verbunden sein (beispielsweise mit einer Antriebsmotorsteuerung, mit Schaltkupplungssteuereinrichtungen, etc.).

Folglich kann in der Aktuatoranordnung 10 die Funktion der Steuereinrichtung 12 überprüft werden. Im Falle eines Auftretens eines Fehlers in der Steuereinrichtung 12 kann über das Reset-Bauteil 74 ein Reset bzw. ein Abschalten der Leistungsstufen 22, 24 erfolgen.

Die Funktion der Ansteuerschaltungen 18, 20 kann auf diese Weise jedoch nicht überprüft werden. Zu diesem Zweck sind die Wandlereinrichtungen 26, 28 vorgesehen, die Zustandssignale von den elektrischen Motoren 14, 16 unmittelbar der Steuereinrichtung 12 zuleiten. In der Steuereinrichtung 12 können diese Zustandssignale von den Sensoren mit Zustandssignalen verglichen werden, die der Steuereinrichtung 12 von den Ansteuerschaltungen 18, 20 übermittelt werden.

Falls die Ansteuerschaltungen 18, 20 fehlerhaft arbeiten, werden auch die zurückgekoppelten Istwerte 54-60 fehlerhaft sein bzw. unterschiedlich sein von den Zustandswerten, die über die Kontrollsignale 64, 66 übermittelt werden. Falls ein solcher Fehlerzustand der Ansteuerschaltungen 18, 20 bekannt wird, löst die Steuereinrichtung 12 ebenfalls über die Verbindung 75 einen Reset mittels des Reset-Bauteils 74 aus und schaltet folglich die Leistungsstufen 22, 24 ab.

Die Wandlereinrichtungen 26, 28 können beispielsweise schnelle Digital/AnalogWandler beinhalten, die die Istsignale 46, 48 mehr oder weniger zeitgleich in entsprechende analoge Kontrollsignale 64, 66 umsetzen. Die Steuereinrichtung 12 ist jedoch möglicherweise nicht dazu ausgelegt, schnelle Änderungen des Zustandes der Motoren 14, 16 zu verarbeiten. Der Grund hierfür kann z.B. daran liegen, dass kostengünstige Prozessoren mit entsprechend hohen Prozessorleistungen nicht zur Verfügung stehen. Dies kann dazu führen, dass die über die Sensoren übermittelten Zustände der Motoren 14, 16 nicht genau erfasst werden können. Bei höheren Drehzahlen kann zudem ein zeitlicher Versatz zwischen der Motorinformation von den Kontrollsignalen und der Motorinformation von den Ansteuerschaltungen 18, 20 auftreten.

Um dennoch eine Aussage über den Zustand der Motoren 14, 16 über einen größeren Drehzahlbereich (also auch bei höheren Drehzahlen und folglich schnellen Änderungen der Zustände) erfassen können, können Plausibilisierungseinrichtungen vorgesehen sein. Beispielsweise kann eine solche Plausibilisierungseinrichtung 86 in der Steuereinrichtung 12 vorgesehen sein. Alternativ ist es auch möglich, dass derartige Plausibilisierungseinrichtungen 82, 84 jeweils in den Wandlereinrichtungen 26, 28 implementiert sind. In diesem Fall sind die Wandlereinrichtungen 26, 28 vorzugsweise auch über geeignete Sync-Verbindungen 83, 85 mit der Steuereinrichtung 12 verbunden.

Die Funktion der Plausibilisierungseinrichtungen soll nachstehend noch erläutert werden.

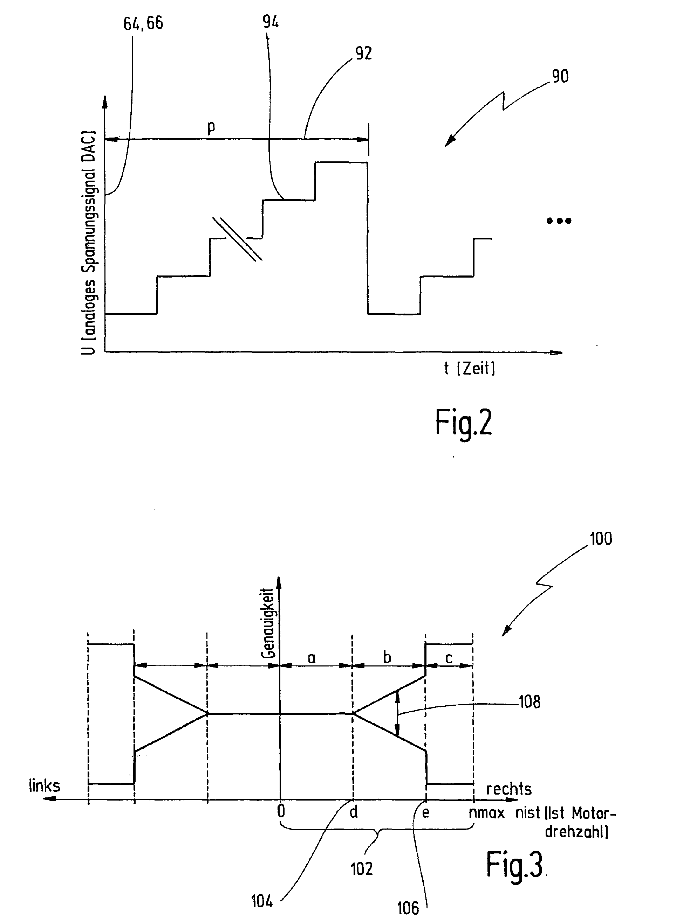

In Figur 2 ist ein Diagramm 90 gezeigt, das die von den Wandlereinrichtungen 26, 28 übermittelten Kontrollsignale 64, 66 über der Zeit zeigt. Die Kontrollsignale 64, 66 werden in Form von Treppensignalen erzeugt, die über eine Periode p treppenförmig ansteigen. Die Periode p entspricht dabei einer so genannten elektrischen Umdrehung, die von der Anzahl der Pole und anderen Faktoren (Anzahl der Hall-Sensoren etc.) abhängt. Eine elektrische Umdrehung kann dabei beispielsweise einem Drehwinkel eines elektrischen Motors 14, 16 von 7,5° entsprechen. Die Kontrollsignale 64, 66 liegen in Form von Treppensignalen vor, wobei jede Stufe einem Kommutierungsschritt des jeweiligen Motors 14, 16 entsprechen kann. Derartige Treppensignale lassen sich in der Steuereinrichtung 12 auf vergleichsweise einfache Weise verarbeiten.

Figur 3 zeigt ein weiteres Diagramm 100, das die Genauigkeit über der Drehzahl der Motoren 14, 16 anzeigt. Der von der Steuereinrichtung 12 überwachte Drehzahlbereich ist dabei mit 102 bezeichnet. Der Drehzahlbereich 102 teilt sich in mehrere Unterbereiche auf, wobei ein erster Bereich a von einer Drehzahl 0 bis zu einer ersten vorgegebenen Drehzahl 104 verläuft. Die erste vorgegebene Drehzahl kann eine Drehzahl sein, die so niedrig ist, dass die Steuereinrichtung 12 aus den Kontrollsignalen 64, 66 und den Motoristwerten 54-60 jeweils die exakte Drehzahl des jeweiligen Motors 14, 16 in zeitlicher Zuordnung ableiten kann (aufgrund der zur Verfügung stehenden Prozessorleistung). Ein zweiter Unterbereich b erstreckt sich von der ersten vorgegebenen Drehzahl 104 bis zu einer zweiten vorgegebenen Drehzahl 106, die höher liegt als die erste vorgegebene Drehzahl. Oberhalb der zweiten vorgegebenen Drehzahl 106 sind die Drehzahlen der Motoren 14, 16 so hoch, dass das so genannte Nyquist-Kriterium bzw. die Bedingung einer zeitlichen Korrelation nicht mehr erfüllt werden kann. Oberhalb der zweiten vorgegebenen Drehzahl 106 ist die Steuereinrichtung 12 folglich nicht mehr in der Lage, die Drehzahl der Motoren 14, 16 zu bestimmen.

In dem zweiten Unterbereich, der in Figur 3 mit b angegeben ist, kann die Steuereinrichtung 12 die Drehzahl des jeweiligen Motors 14, 16 nicht exakt bestimmen, jedoch ermitteln, ob sich die Drehzahl innerhalb eines Genauigkeitsbandes 108 befindet, das ausgehend von der ersten vorgegebenen Drehzahl 104 bis hin zu der zweiten vorgegebenen Drehzahl 106 immer größer wird (die Überprüfung wird immer ungenauer).

Die oben erwähnten Plausibilisierungseinrichtungen 86 bzw. 82, 84 können dazu ausgelegt sein, durch Plausibilitätserwägungen festzustellen, ob die von den Ansteuerschaltungen 18, 20 übermittelte Istdrehzahl 50, 60 sich innerhalb des für die jeweilige Drehzahl zutreffenden Genauigkeitsbandes 108 befindet. Wenn dies der Fall ist, wird angenommen, dass die jeweilige Ansteuerschaltung 18, 20 ordnungsgemäß funktioniert.

Die Plausibilisierungseinrichtungen 86 bzw. 82, 84 können ferner dazu in der Lage sein, bei Drehzahlen oberhalb der zweiten vorgegebenen Drehzahl 106 eine Plausibilitätserwägung dahingehend anzustellen, ob es plausibel ist, dass sich die Drehzahl des jeweiligen Motors 14, 16 tatsächlich innerhalb dieses Drehzahlenbereiches (c in Figur 3) befindet. Hierzu können die Plausibilisierungseinrichtungen 86 bzw. 82, 84 dazu ausgelegt sein, zu überprüfen, ob sich die Drehzahl des jeweiligen Motors 14, 16 vor Erreichen dieses Unterbereiches c in dem Unterbereich b befunden hat. Wenn dies der Fall ist, wird es als plausibel angenommen, dass die aktuell von der jeweiligen Ansteuerschaltung 18, 20 übermittelte Drehzahl sich oberhalb der zweiten vorgegebenen Drehzahl 106 befindet.

Mit anderen Worten kann über die Plausibilisierungseinrichtungen 86 bzw. 82, 84 erreicht werden, dass die exakte Position bzw. Drehzahl des jeweiligen elektrischen Motors 14, 16 nicht exakt über das gesamte Drehzahlband 102 übermittelt werden muss bzw. nur eine geringe oder keine Korrelation zwischen den Kontrollsignalen 64, 66 und den Motoristwerten 54-60 vorhanden sein muss. Hierdurch kann Rechenzeit eingespart werden.

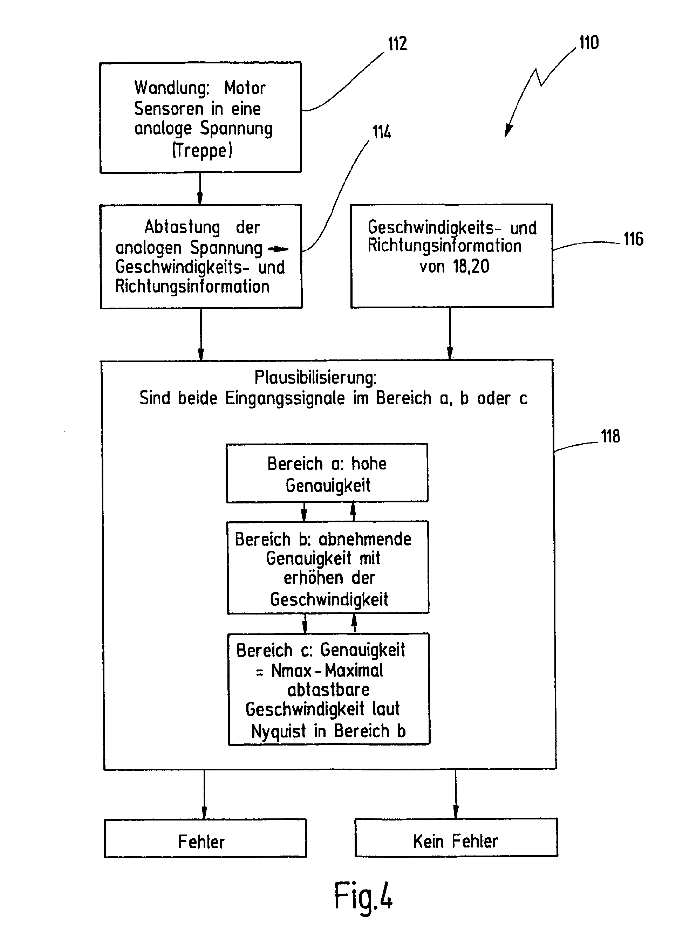

Der generelle Ablauf zur Überprüfung der Ansteuerschaltungen 18, 20 ist in Figur 4 in Form eines schematischen Ablaufdiagramms 110 dargestellt.

In einem Schritt 112 erfolgt in den Wandlereinrichtungen 26, 28 jeweils eine Wandlung der Istsignale 46, 48 in die treppenförmigen Kontrollsignale 64, 66. Anschließend werden in der Steuereinrichtung 12 die jeweiligen Kontrollsignale 64, 66 abgetastet und in eine entsprechende Geschwindigkeits- und/oder Richtungsinformation umgewandelt (Schritt 114).

In einem hierzu parallelen Schritt 116 erhält die Steuereinrichtung 12 Geschwindigkeits- und Richtungsinformationen von den Ansteuerschaltungen 18, 20, und zwar über die Istwerte 54-60.

In einem Schritt 118 erfolgt eine Plausibilisierung in den Plausibilisierungseinrichtungen 82, 84 bzw. 86. Sofern sich die Geschwindigkeits- und Richtungsinformation von den Ansteuerschaltungen 18, 20 in dem Bereich a (bis zu der ersten vorgegebenen Drehzahl 102) befindet, kann genau festgestellt werden, ob diese Zustandsinformationen mit den entsprechenden Zustandsinformationen übereinstimmen, die über die Wandlereinrichtungen 26, 28 übermittelt werden.

In dem zweiten Unterbereich b wird die abnehmende zeitliche Korrelation dadurch überwunden, dass überprüft wird, ob die von den Ansteuerschaltungen 18, 20 übermittelte Zustandsinformation innerhalb eines bestimmten Genauigkeitsbandes 108 liegt. Sofern die Zustandsinformation von den Ansteuerschaltungen 18, 20 in dem Unterbereich c liegt, wird durch die Plausibilisierungseinrichtungen 86 bzw. 82, 84 überprüft, ob dies plausibel ist. Sofern sich die Drehzahl zuvor in dem Unterbereich b befunden hat, wird dies als plausibel angenommen.

In Abhängigkeit hiervon wird ausgehend von dem Schritt 118 entweder ein Fehlersignal erzeugt oder aber festgestellt, dass kein Fehler in den Ansteuerschaltungen 18, 20 vorliegt.

Die erste vorgegebene Drehzahl 104 kann beispielsweise im Bereich von 500 bis 2.000 Umdrehungen liegen. Die zweite vorgegebene Drehzahl 106 kann beispielsweise im Bereich vom 1.500 bis 5.000 Umdrehungen liegen.

Ferner ist es generell akzeptabel, die Funktion der Ansteuerschaltungen 18, 20 lediglich in einem Bereich relativ niedriger Drehzahlen überprüfen zu können. Dies kann insbesondere dann der Fall sein, wenn sicherheitsrelevante Fehler lediglich in den unteren Drehzahlbereichen auftreten können.

Die oben beschriebenen Verfahren zur Überprüfung der Funktion der Ansteuerschaltungen 18, 20 können asynchron erfolgen. Mit anderen Worten müssen insbesondere ab der ersten vorgegebenen Drehzahl 104 die verglichenen Zustände (von den Wandlereinrichtungen 26, 28 einerseits und den Ansteuerschaltungen 18, 20 andererseits) nicht jeweils auf gleichen Messzeitpunkten der elektrischen Motoren 14, 16 basieren. Hierdurch können aufwändige Synchronisierungsmaßnahmen weggelassen werden.

Sofern hingegen beispielsweise die o.g. Sync-Signale 67, 68 zwischen der Steuereinrichtung 12 und den Ansteuerschaltungen 18, 20 übermittelbar sind, ist es möglich, in der Steuereinrichtung die Zustandsinformation von den Wandlereinrichtungen 26, 28 in zeitliche Beziehung zu der Zustandsinformation von den Ansteuerschaltungen 18, 20 zu setzen, so dass die Zustandsinformation jeweils auf gleichen Messzeitpunkten der Sensoranordnungen der elektrischen Motoren 14, 16 beruht.

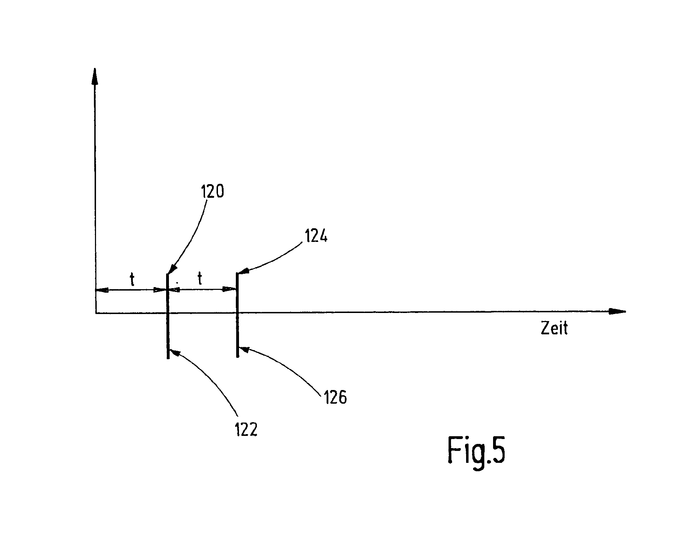

Dies ist in Figur 5 schematisch dargestellt. Dort ist gezeigt, dass zu einem Zeitpunkt 122 ein Motorzustand 120 über die jeweilige Wandlereinrichtung 26, 28 eingelesen wird. Mit einem zeitlichen Versatz hierzu wird zu einem Zeitpunkt 126 ein auf der gleichen Messung beruhendes Signal 124 von der jeweiligen Ansteuerschaltung 18, 20 eingelesen (also über die Istwerte 54-60). Über die Sync-Signale 67, 68 können diese Zeitpunkte 122, 126 in der Steuereinrichtung 12 aufeinander synchronisiert werden. Sofern hier eine Abweichung der Zustände besteht, wird ein Fehlersignal ausgegeben, das dann über die Verbindung 75 an das Reset-Bauteil 74 gegeben werden kann.

Die alternative Ausführungsform kann auch zusätzlich zu der in Bezug auf die Figuren 1 bis 4 beschriebene erste Ausführungsform angewendet werden.

Bei der alternativen Ausführungsform versteht sich, dass jeweils Vergleiche aufgrund von einer zeitgleichen Messung durchgeführt werden. Daher kann bereits bei Vorliegen jeder Differenz oder bei Vorlagen einer kleinen Differenz der Zustandswerte von den Wandlereinrichtungen 26, 28 einerseits bzw. den Ansteuerschaltungen 18, 20 andererseits ein Fehlerzustand ausgegeben werden.

## Patentansprüche

1. Aktuatoranordnung (10) für einen Kraftfahrzeugantriebsstrang, mit
- einer Steuereinrichtung (12),
- einem Aktuator (14, 16) und
- einer Ansteuerschaltung (18, 20) für den Aktuator, die wenigstens ein Sollsignal (30-36) betreffend einen Aktuator von der Steuereinrichtung (12) erhält und in ein Ansteuersignal (38, 40) für den Aktuator umsetzt,
- wobei die Steuereinrichtung (12) mittels der Überwachungseinrichtung (70; 72) auf Steuereinrichtungs-Fehler hin überprüft wird und wobei die Ansteuerschaltung (18, 20) und/oder die zwischen Ansteuerschaltung und Motor angeordnete Leistungsstufe (22, 24) bei Auftreten eines solchen Steuereinrichtungs-Fehlers ein Reset-Signal (76, 78) erhält,
die Steuereinrichtung (12) dazu ausgelegt ist, die Funktion der Ansteuerschaltung (18, 20) zu überprüfen und bei Auftreten einer Ansteuerschaltungs-Fehlfunktion ein Reset-Signal (76, 78) für die Ansteuerschaltung (18, 20) und/oder für die Leistungsstufe (22, 24) zu erzeugen, wobei
die Steuereinrichtung (12) dazu ausgelegt ist, ein Kontrollsignal (46, 48, 64, 66) von dem Aktuator (14, 16) zu empfangen und das Kontrollsignal (46, 48, 64, 66) zu überprüfen, **dadurch gekennzeichnet, dass** die Steuereinrichtung (12) dazu ausgelegt ist, von der Ansteuerschaltung (18, 20) ein weiteres Signal (54-60) zu empfangen und das Kontrollsignal (46, 48, 64, 66) und das weitere Signal (54-60) daraufhin auszuwerten, ob die Ansteuerschaltung ordnungsgemäß funktioniert.

2. Aktuatoranordnung nach Anspruch 1, **dadurch gekennzeichnet, dass** das Kontrollsignal (46, 48, 64, 66) ein digitales Signal (46, 48) von wenigstens einem Sensor aufweist.

3. Aktuatoranordnung nach Anspruch 2, **dadurch gekennzeichnet, dass** das Kontrollsignal (46, 48, 64, 66) mehrere digitale Signale (46, 48) aufweist, die den Zustand des Aktuators (14, 16) überwachen.

4. Aktuatoranordnung nach Anspruch 2 oder 3, **dadurch gekennzeichnet, dass** das digitale Kontrollsignal (46, 48) ein digitales Kommutierungssignal (46, 48) ist.

5. Aktuatoranordnung nach einem der Ansprüche 2 - 4, **dadurch gekennzeichnet, dass** das digitale Kontrollsignal (46, 48) einer Wandlereinrichtung (26, 28) zugeführt wird, die das digitale Kontrollsignal (46, 48) in ein Kontrollsignal (64, 66) umsetzt, das der Steuereinrichtung (12) zugeführt wird.

6. Aktuatoranordnung nach einem der Ansprüche 1 - 5, **dadurch gekennzeichnet, dass** das Sollsignal (30-36) ein analoges Signal (30-36) ist.

7. Aktuatoranordnung nach einem der Ansprüche 1 - 6, **dadurch gekennzeichnet, dass** das weitere Signal ein Istsignal (54-60) betreffend eine Aktuatorgröße ist, wobei das Istsignal (54-60) und das Sollsignal (30-36) auf einer bidirektionalen Leitung zwischen der Steuereinrichtung (12) und der Ansteuerschaltung (18, 20) übertragen werden.

8. Aktuatoranordnung nach einem der Ansprüche 1 - 7, **dadurch gekennzeichnet, dass** der Aktuator (14, 16) als Motor ausgebildet ist und einen vorgegebenen Drehzahlbereich (102) aufweist, wobei die Steuereinrichtung (12) und/oder eine Wandlereinrichtung (26, 28), die das Kontrollsignal in ein Kontrollsignal (64, 66) für die Steuereinrichtung (12) umsetzt, dazu ausgelegt ist, das Kontrollsignal (46, 48, 64, 66) bis zu einer ersten vorgegeben Drehzahl (104) innerhalb des Drehzahlbereiches (102) so zu verarbeiten, dass sich aus dem verarbeiteten Kontrollsignal die Drehzahl des Motors (14, 16) exakt reproduzieren lässt, und wobei oberhalb der ersten vorgegebenen Drehzahl (104) eine Plausibilisierungseinrichtung (82, 84; 86) in der Steuereinrichtung (12) und/oder in der Wandlereinrichtung (26, 28) das verarbeitete Kontrollsignal daraufhin überprüft, ob sich die daraus ergebende Drehzahl innerhalb eines vorgegebenen Drehzahlbandes bzw. Genauigkeitsbandes (108) befindet.

9. Aktuatoranordnung nach Anspruch 8, **dadurch gekennzeichnet, dass** das Drehzahlband bzw. Genauigkeitsband (108) umso größer ist, umso mehr die sich aus dem verarbeiteten Kontrollsignal ergebende Drehzahl von der ersten vorgegebenen Drehzahl (104) abweicht.

10. Aktuatoranordnung nach einem der Ansprüche 1 - 9, **dadurch gekennzeichnet, dass** der Aktuator als Motor (14, 16) ausgebildet ist und einen vorgegebenen Drehzahlbereich (102) aufweist, wobei die Steuereinrichtung (12) und/oder eine Wandlereinrichtung (26, 28), die das Kontrollsignal in ein Kontrollsignal (64, 66) für die Steuereinrichtung (12) umsetzt, dazu ausgelegt ist, das Kontrollsignal bis zu einer zweiten vorgegeben Drehzahl (106) innerhalb des Drehzahlbereiches (102) so zu verarbeiten, dass das Nyquist-Kriterium eingehalten wird, und wobei oberhalb der zweiten vorgegebenen Drehzahl (106) eine Plausibilisierungseinrichtung (82, 84; 86) in der Steuereinrichtung (12) und/oder in der Wandlereinrichtung (26, 28) überprüft, ob es plausibel ist, dass sich die Drehzahl oberhalb der zweiten vorgegebenen Drehzahl (106) befindet.

11. Aktuatoranordnung nach Anspruch 10, **dadurch gekennzeichnet, dass** die Plausibilisierungseinrichtung (82, 84; 86) es als plausibel erkennt, dass sich die Drehzahl oberhalb der zweiten vorgegebenen Drehzahl (106) befindet, wenn sich die Drehzahl zuvor in einem Drehzahlband unterhalb der zweiten vorgegebenen Drehzahl (106) befand.

12. Aktuatoranordnung nach einem der Ansprüche 1 - 11, wobei die Steuereinrichtung (12) dazu ausgelegt ist, ein Zustandssignal von dem Aktuator mit einem Zustandssignal der Ansteuerschaltung zeitgleich bzw. zeitlich zugeordnet miteinander zu vergleichen, um die Funktion der Ansteuerschaltung zu überprüfen.

13. Verfahren zum Betreiben einer Aktuatoranordnung für einen Kraftfahrzeugantriebsstrang, wobei die Aktuatoranordnung (10) eine Steuereinrichtung (12), einen Aktuator (14, 16) und eine Ansteuerschaltung (18, 20) für den Aktuator aufweist,
- wobei die Aktuatoranordnung wenigstens ein Sollsignal (30-36) betreffend einen Aktuator von der Steuereinrichtung (12) erhält und in ein Ansteuersignal (38, 40) für den Aktuator umsetzt,
- wobei die Steuereinrichtung (12) mittels der Überwachungseinrichtung (70; 72) auf Steuereinrichtungs-Fehler hin überprüft wird und wobei die Ansteuerschaltung (18, 20) und/oder die zwischen Ansteuerschaltung und Motor angeordnete Leistungsstufe (22, 24) bei Auftreten eines solchen Steuereinrichtungs-Fehlers ein Reset-Signal (76, 78) erhält,
wobei
die Steuereinrichtung (12) die Funktion der Ansteuerschaltung (18, 20) überprüft und bei Auftreten einer Ansteuerschaltungs-Fehlfunktion ein Reset-Signal (76, 78) für die Ansteuerschaltung (18, 20) und/oder für die Leistungsstufe (22, 24) erzeugt, wobei die Steuereinrichtung (12) ein Kontrollsignal (46, 48, 64, 66) von dem Aktuator (14, 16) zu empfängt und das Kontrollsignal (46, 48, 64, 66) überprüft,
**dadurch gekennzeichnet, dass** die Steuereinrichtung (2) von der Ansteuerschaltung (18, 20) ein weiteres Signal (54-60) empfängt und das Kontrollsignal (46, 48, 64, 66) und das weitere Signal (54-60) daraufhin auswertet, ob die Ansteuerschaltung ordnungsgemäß funktioniert.

## Claims

1. Actuator arrangement (10) for a motor vehicle drive train, having
- a control device (12),
- a monitoring device (70; 72),
- a power stage (22, 24),
- an actuator (14, 16) and
- a drive circuit (18, 20) for the actuator, which drive circuit (18, 20) receives at least one nominal signal (30-36) relating to an actuator from the control device (12) and converts it into a drive signal (38, 40) for the actuator,
- wherein the control device (12) is checked for control device faults by means of the monitoring device (70; 72), and wherein the drive circuit (18, 20) and/or the power stage (22, 24) which is arranged between the drive circuit and the motor receives a reset signal (76, 78) when such a control device fault occurs,
- wherein the control device (12) is configured to check the function of the drive circuit (18, 20) and to generate a reset signal (76, 78) for the drive circuit (18, 20) and/or for the power stage (22, 24) if a drive circuit malfunction occurs, wherein the control device (12) is configured to receive a control signal (46, 48, 64, 66) from the actuator (14, 16) and to check the control signal (46, 48, 64, 66),
**characterized in that** the control device (12) is configured to receive a further signal (54-60) from the drive circuit (18, 20) and to evaluate the control signal (46, 48, 64, 66) and the further signal (54-60) to determine whether the drive circuit is functioning correctly.

2. Actuator arrangement according to Claim 1, **characterized in that** the control signal (46, 48, 64, 66) has a digital signal (46, 48) from at least one sensor.

3. Actuator arrangement according to Claim 2, **characterized in that** the control signal (46, 48, 64, 66) has a plurality of digital signals (46, 48) which monitor the state of the actuator (14, 16).

4. Actuator arrangement according to Claim 2 or 3, **characterized in that** the digital control signal (46, 48) is a digital commutation signal (46, 48).

5. Actuator arrangement according to one of Claims 2-4, **characterized in that** the digital control signal (46, 48) is fed to a converter device (26, 28) which converts the digital control signal (46, 48) into a control signal (64, 66) which is fed to the control device (12).

6. Actuator arrangement according to one of Claims 1-5, **characterized in that** the nominal signal (30-36) is an analogue signal (30-36).

7. Actuator arrangement according to one of Claims 1-6, **characterized in that** the further signal is an actual value signal (54-60) relating to an actuator variable, the actual value signal (54-60) and the nominal signal (30-36) are transmitted on a bidirectional line between the control device (12) and the drive circuit (18, 20).

8. Actuator arrangement according to one of Claims 1-7, **characterized in that** the actuator (14, 16) is embodied as a motor and has a predefined rotational speed range (102), wherein the control device (12) and/or a converter device (26, 28) which converts the control signal into a control signal (64, 66) for the control device (12) is configured to process the control signal (46, 48, 64, 66) up to first predefined rotational speed (104) within the rotational speed range (102) in such a way that the rotational speed of the motor (14, 16) can be reproduced exactly from the processed control signal, and wherein, above the first predefined rotational speed (104), a plausibility-checking device (82, 84; 86) in the control device (12) and/or in the converter device (26, 28) checks the processed control signal to determine whether the resulting rotational speed is within a predefined rotational speed band or accuracy band (108).

9. Actuator arrangement according to Claim 8, **characterized in that** the rotational speed band or accuracy band (108) is larger the greater the degree by which the rotational speed which results from the processed control signal differs from the first predefined rotational speed (104).

10. Actuator arrangement according to one of Claims 1-9, **characterized in that** the actuator is embodied as a motor (14, 16) and has a predefined rotational speed range (102), wherein the control device (12) and/or a converter device (26, 28) which converts the control signal into a control signal (64, 66) for the control device (12) is configured to process the control signal up to a second predefined rotational speed (106) within the rotational speed range (102), in such a way that the Nyquist criterion is met, and wherein, above the second predefined rotational speed (106), a plausibility-checking device (82, 84; 86) in the control device (12) and/or in the converter device (26, 28) checks whether it is plausible that the rotational speed is above the second predefined rotational speed (106).

11. Actuator arrangement according to Claim 10, **characterized in that**, if the rotational speed was previously in a rotational speed band below the second predefined rotational speed (106), the plausibility-checking device (82, 84; 86) detects it as plausible that the rotational speed is above the second predefined rotational speed (106).

12. Actuator arrangement according to one of Claims 1-11, wherein the control device (12) is configured to compare a state signal from the actuator with a state signal of the drive circuit simultaneously or in a chronological assignment to one another, in order to check the function of the drive circuit.

13. Method for operating an actuator arrangement for a motor vehicle drive train, wherein the actuator arrangement comprises a control device (12), an actuator (14, 16) and a drive circuit (18, 20) for the actuator,
- wherein the actuator arrangement receives at least one nominal signal (30-36) relating to an actuator from the control device (12) and converts it into a drive signal (38, 40) for the actuator,
- wherein the control device (12) is checked for control device faults by means of a monitoring device (70; 72) and wherein the drive circuit (18, 20) and/or the power stage (22, 24) which is arranged between the drive circuit and the motor receives a reset signal (76, 78) when such a control device fault occurs,
- wherein the control device (12) checks the function of the drive circuit (18, 20) and generates a reset signal (76, 78) for the drive circuit (18, 20) and/or for the power stage (22, 24) if a drive circuit malfunction occurs, wherein the control device (12) receives a control signal (46, 48, 64, 66) from the actuator (14, 16) and checks the control signal (46, 48, 64, 66),
**characterized in that** the control device (12) receives a further signal (54-60) from the drive circuit (18, 20) and evaluates the control signal (46, 48, 64, 66) and the further signal (54-60) to determine whether the drive circuit is functioning correctly.

## Revendications

1. Dispositif actionneur (10) pour une chaîne cinématique de véhicule, comprenant
- un système de commande (12),
- un système de contrôle (70 ; 72),
- un étage de puissance (22, 24),
- un actionneur (14, 16) et
- un circuit d'excitation (18, 20) pour l'actionneur, qui reçoit du système de commande (12) au moins un signal de consigne (30-36) concernant un actionneur et le transforme en un signal d'excitation (38, 40) pour l'actionneur,
- le système de commande (12) étant contrôlé au moyen du système de contrôle (70 ; 72) au niveau des erreurs du système de commande et le circuit d'excitation (18, 20) et/ou l'étage de puissance (22, 24) disposé entre le circuit d'excitation et le moteur recevant un signal de réinitialisation (76, 78) en cas d'apparition d'une telle erreur du système de commande,
le système de commande (12) étant conçu pour contrôler le fonctionnement du circuit d'excitation (18, 20) et pour générer, en cas d'apparition d'un dysfonctionnement du circuit d'excitation, un signal de réinitialisation (76, 78) pour le circuit d'excitation (18, 20) et/ou pour l'étage de puissance (22, 24),
le système de commande (12) étant conçu pour recevoir de l'actionneur (14, 16) un signal de contrôle (46, 48, 64, 66) et contrôler le signal de contrôle (46, 48, 64, 66),
**caractérisé en ce que** le système de commande (12) est conçu pour recevoir du circuit d'excitation (18, 20) un autre signal (54-60) et pour analyser ensuite le signal de contrôle (46, 48, 64, 66) et l'autre signal (54-60) pour savoir si le circuit d'excitation fonctionne correctement.

2. Dispositif actionneur selon la revendication 1, **caractérisé en ce que** le signal de contrôle (46, 48, 64, 66) présente un signal (46, 48) numérique venant d'au moins un capteur.

3. Dispositif actionneur selon la revendication 2, **caractérisé en ce que** le signal de contrôle (46, 48, 64, 66) présente plusieurs signaux (46, 48) numériques, qui contrôlent l'état de l'actionneur (14, 16).

4. Dispositif actionneur selon la revendication 2 ou 3, **caractérisé en ce que** le signal de contrôle (46, 48) numérique est un signal de commutation (46, 48) numérique.

5. Dispositif actionneur selon l'une quelconque des revendications 2 à 4, **caractérisé en ce que** le signal de contrôle (46, 48) numérique est amené à un système convertisseur (26, 28), qui convertit le signal de contrôle (46, 48) numérique en un signal de contrôle (64, 66), qui est amené au système de commande (12).

6. Dispositif actionneur selon l'une quelconque des revendications 1 à 5, **caractérisé en ce que** le signal de consigne (30-36) est un signal (30-36) analogique.

7. Dispositif actionneur selon l'une quelconque des revendications 1 à 6, **caractérisé en ce que** l'autre signal est un signal réel (54-60) concernant une grandeur d'actionneur, le signal réel (54-60) et le signal de consigne (30-36) étant transmis sur une ligne bidirectionnelle entre le système de commande (12) et le circuit d'excitation (18, 20).

8. Dispositif actionneur selon l'une quelconque des revendications 1 à 7, **caractérisé en ce que** l'actionneur (14, 16) est conçu comme moteur et présente une plage de régime (102) prédéfinie, le système de commande (12) et/ou un système convertisseur (26, 28), qui convertit le signal de commande en un signal de contrôle (64, 66) pour le système de commande (12), étant conçu pour traiter le signal de contrôle (46, 48, 64, 66) jusqu'à un premier régime prédéfini (104) à l'intérieur de la plage de régime (102), de telle sorte que le régime du moteur (14, 16) peut être reproduit de façon précise à partir du signal de contrôle traité, et un système de contrôle de plausibilité (82, 84 ; 86) dans le système de commande (12) et/ou dans le système convertisseur (26, 28) vérifiant ensuite le signal de contrôle traité au-dessus du premier régime (104) prédéfini pour voir si le régime en résultant se situe dans les limites d'une bande de régime ou bande de précision (108) prédéfinie.

9. Dispositif actionneur selon la revendication 8, **caractérisé en ce que** la bande de régime ou la bande de vitesse (108) est d'autant plus grande que le régime résultant du signal de contrôle traité diffère davantage du premier régime (104) prédéfini.

10. Dispositif actionneur selon l'une quelconque des revendications 1 à 9, **caractérisé en ce que** l'actionneur est conçu comme moteur (14, 16) et présente une plage de régime (102) prédéfinie, le système de commande (12) et/ou un système convertisseur (26, 28), qui convertit le signal de contrôle en un signal de contrôle (64, 66) pour le système de commande (12), étant conçu pour traiter le signal de contrôle jusqu'à un second régime (106) prédéfini dans les limites de la plage de régime (102), de telle sorte que le critère de Nyquist est respecté, et un système de contrôle de plausibilité (82, 84 ; 86) dans le système de commande (12) et/ou dans le dispositif convertisseur (26, 28) vérifiant au-dessus du second régime (106) prédéfini s'il est plausible que le régime se trouve au-dessus du second régime (106) prédéfini.

11. Dispositif actionneur selon la revendication 10, **caractérisé en ce que** le système de contrôle de plausibilité (82, 84 ; 86) reconnaît comme plausible le fait que le régime se trouve au-dessus du second régime (106) prédéfini, alors que le régime se trouvait auparavant dans une bande de régime au-dessous du second régime (106) prédéfini.

12. Dispositif actionneur selon l'une quelconque des revendications 1 à 11, le système de commande (12) étant conçu pour comparer un signal d'état de l'actionneur avec un signal d'état du circuit d'excitation de façon simultanée ou associée au niveau du temps, afin de contrôler le fonctionnement du circuit d'excitation.

13. Procédé pour faire fonctionner un dispositif actionneur pour une chaîne cinématique de véhicule, le dispositif actionneur (10) présentant un système de commande (12), un actionneur (14, 16) et un circuit d'excitation (18, 20) pour l'actionneur,
- le dispositif actionneur recevant du système de commande (12) au moins un signal de consigne (30-36) concernant un actionneur et le convertissant en un signal d'excitation (38, 40) pour l'actionneur,
- le système de commande (12) étant contrôlé au moyen du système de contrôle (70 ; 72) au niveau des erreurs du système de commande et le circuit d'excitation (18, 20) et/ou l'étage de puissance (22, 24) disposé entre le circuit d'excitation et le moteur recevant un signal de réinitialisation (76, 78) en cas d'apparition d'un tel défaut du système de commande,
le système de commande (12) contrôlant le fonctionnement du circuit d'excitation (18, 20) et générant, en cas d'apparition d'un dysfonctionnement du circuit d'excitation, un signal de réinitialisation (76, 78) pour le circuit d'excitation (18, 20) et/ou pour l'étage de puissance (22, 24), le système de commande (12) recevant de l'actionneur (14, 16) un signal de contrôle (46, 48, 64, 66) et vérifiant le signal de contrôle (46, 48, 64, 66),
**caractérisé en ce que** le système de commande (12) reçoit du circuit d'excitation (18, 20) un autre signal (54-60) et analyse ensuite le signal de contrôle (46, 48, 64, 66) et l'autre signal (54-60) pour savoir si le circuit d'excitation fonctionne correctement.
